# EUROPEAN PATENT SPECIFICATION

(11) **EP 4 061 147 B1**
(45) Date of publication and mention of the grant of the patent: **04.03.2026**
(21) Application number: 19821375.3
(22) Date of filing: 21.11.2019
(51) Int. Cl.: A23L 7/122, A23L 29/30, A23P 20/10

(54) **COMESTIBLES AND FOOD PRODUCTS COMPRISING AN ERYTHRITOL AND SUCROSE COATING AND METHOD OF MAKING THEM**
ESSBARE PRODUKTE UND LEBENSMITTEL MIT EINEM ERYTHRITOL- UND SACCHAROSEÜBERZUG UND HERSTELLUNGSVERFAHREN DERSELBEN
PRODUITS COMESTIBLES ET ALIMENTS COMPRENANT UN REVÊTEMENT D'ÉRYTHRITOL ET DE SACCHAROSE ET LEUR PROCÉDÉ DE PRODUCTION

(43) Date of publication of application: 28.09.2022
(73) Proprietor: General Mills, Inc., Minneapolis, MN 55426 (US)
(72) Inventor: GOEDEKEN, Douglas, L., Blaine, MN 55449 (US); WALTHER, Goeran, Plymouth, MN 55447 (US); WHITMAN, Scott, K., New Hope, MN 55427 (US)
(74) Representative: Novagraaf Group
(86) International application number: PCT/US2019/062542
(87) International publication number: WO 2021/101545

(56) References cited:
- WO-A1-2011/090811
- WO-A1-2011/139959
- WO-A2-00/42865
- JP-A- H09 278 671
- US-A- 4 379 171
- US-A- 4 880 645
- FAST R B ET AL: "Breakfast Cereals and How they are made", 1 January 1990, BREAKFAST CEREALS AND HOW THEY ARE MADE, MINNESOTA, AACC, US, PAGE(S) 195 - 220, XP002165120

## Description

### BACKGROUND OF THE INVENTION

The present invention pertains to the art of food production and, more particularly, to coatings containing erythritol and sucrose.

Cereal products, such as ready-to-eat ("R-T-E") or breakfast cereals, are well-known and popular food items, particularly presweetened R-T-E cereals. Typically, these products include various coatings, usually comprising nutritive carbohydrate sweeteners such as sucrose, corn syrup, dextrose, fructose, high fructose corn syrup, fiber syrups, grain syrups, honey, hydrogenated starch, inulin, molasses, rice syrups, sorghum syrup, *etc.* Also known are presweetened R-T-E cereals comprising coatings that include a high-potency sweetener.

Presweetened breakfast cereals are typically prepared by first producing unsweetened cereal pieces, coating the cereal pieces with an aqueous slurry or solution of sweeteners and then drying the coated pieces in an oven or air current to remove the added moisture.

One problem with sugar-coated R-T-E cereals is the high amount of sugar in the finished product that is necessary to impart sweetness and assist in maintaining the desired texture in milk, referred to as bowl life. As used herein, "sugar" includes mono-and disaccharides, such as glucose, fructose, maltose, lactose and sucrose, but most commonly means sucrose, otherwise known as table sugar. The sugar content of R-T-E cereals can be reduced by substituting sugar with one or more high-potency artificial sweeteners, such as aspartame, saccharin and sucralose, and/or by using natural sweeteners. While useful in reducing the sugar content of R-T-E cereals, the finished products containing such substitutes often suffer from the absence of certain physical and organoleptic attributes provided by the presence of sugar-based coatings. In particular, the products can lack the bite or crispness and bowl life in milk exhibited by sugar coatings and require special packaging to minimize water absorption.

Given the state of the art as described above, there is a continuing need for improved reduced-sugar coatings and for coated comestibles prepared therewith that have physical and organoleptic properties similar to those of coatings with more sugar.

WO 2011/139959 discloses a coated food composition comprising a food product and a coating, wherein the coating comprises a mixture of erythritol and at least one bulking agent, and a method for preparing such a coated food composition. JP H09 278671 discloses a sugar-coating liquid comprising 110 to 300 parts by weight of sugar with respect to 100 parts by weight of erythritol. "Breakfast cereals and how they are made" (Fast R B et al, 1 January 1990, Breakfast Cereals and how they are made, Minnesota, AACC, US, Page(s) 195-220, XP002165120*)* discloses different methods of drying and tempering in a breakfast cereal process to control the moisture content of the final product.

### SUMMARY OF THE INVENTION

The present invention satisfies the above need by providing reduced-sugar coating or binding compositions comprising erythritol and sucrose, as well as reduced-sugar comestibles topically coated or bound with such compositions, such as R-T-E cereals, clusters, cereal bars, and other food products. The present invention also provides methods of making these products.

In its product aspect, the present invention is directed to a comestible comprising a food piece having a surface and a coating having a crystallinity of about 20% to about 60% on at least a portion of the surface. The coating has a soluble solids content including erythritol, at least a portion of the erythritol being crystalline erythritol, and sucrose, at least a portion of the sucrose being crystalline sucrose. The food piece and the coating have a combined moisture content to about 2% to about 3.5% by weight. The erythritol comprises more than 10% and up to about 50% by dry weight of the soluble solids content, and the sucrose comprises about 50% and up to about 90% by dry weight of the soluble solids content. The soluble solids content includes no more than 10% by dry weight of soluble solids other than erythritol and sucrose.

In its method aspect, the present invention is directed to a method of making dried coated food pieces. The method comprises applying a composition to a surface of food pieces to produce coated food pieces. The composition includes water and a soluble solids component having a soluble solids content including erythritol in an amount more than 10% and up to about 50% by dry weight of the soluble solid content and sucrose in an amount of about 50% and up to about 90% of the soluble solids content. No more than 10% by dry weight of the soluble solids content is other than erythritol and sucrose. The method further comprises drying the coated food pieces to form dried food pieces having at least a partial coating. The coating includes at least a portion of the sucrose in crystal form and at least a portion of the erythritol in crystal form. The dried food pieces have a moisture content of about 2% to about 3.5% by weight.

Additional objects, features and advantages of the invention will become more readily apparent from the following detailed description of preferred embodiments thereof when taken in conjunction with the drawings wherein like reference numerals refer to common parts in the several views.

### BRIEF DESCRIPTION OF THE DRAWINGS

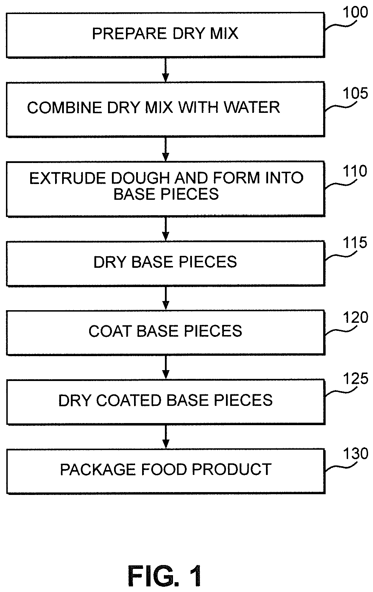

Figure 1 shows a portion of a process for producing ready-to-eat cereal products in accordance with the present invention.

### DETAILED DESCRIPTION OF THE INVENTION

Any specific numerical value listed herein includes a margin of error of +/- 5%. The term "about" increases the margin of error to 10%. For numerical values expressed as percentages, the margin of error refers to the base numerical value. In other words, "about 20%" means 18-22% and not 10-30%. Furthermore, unless otherwise specified or inapplicable, the percentages given are by weight.

Although the techniques of the present invention can be used in connection with a variety of food products, they will primarily be described below with reference to coated ready-to-eat (R-T-E) or breakfast cereals. However, it should become apparent that the present invention is not limited to such products.

A wide variety of food and snack products are prepared from cooked cereal doughs, including R-T-E or breakfast cereals. Generally, in the preparation of cooked cereal dough, cereal or farinaceous ingredients, such as various cereal flours, are first admixed with other dry ingredients, such as salt, minerals, starch and sugars, to form a dry blend of ingredients. This dry blend is then further blended with various liquid ingredients (including water), heated and worked to gelatinize or cook the starch fraction of the cereal ingredients and other starchy materials. A wide variety of blending, cooking and working apparatuses and techniques are known in the art. More recently, the preparation of cooked cereal dough using a cooker extruder, especially a twin-screw extruder, has become commonplace. The cooked cereal doughs so prepared can be processed to form finished products of various sizes, textures and shapes. Typically, a post-cooking cereal dough formation step involves forming suitably sized and shaped individual pieces, such as shreds, flakes, biscuits or puffs. Thereafter, the finished dried cereal base pieces can have a topical coating applied thereto in order to provide desired taste and texture attributes. For instance, in the preparation of a breakfast cereal, the topical coating can be a sugar or fruit coating.

Of particular interest to the present invention is the production of R-T-E cereals that are coated with compositions containing erythritol and sucrose. With initial reference to Figure 1, a portion of a process for producing R-T-E cereals in accordance with the present invention is shown. At step 100, a dry mix of ingredients is prepared. At step 105, the dry mix is combined with water in a cooker extruder to form a cooked cereal dough. Of course, a variety of additional ingredients can be added to the cooker extruder depending on the desired end product. The process illustrated in Figure 1 is intended to provide a more generic overview given that many different cereal production processes are known in the art. Next, at step 110, the cooked cereal dough is extruded and formed into pieces having a desired size and shape. At step 115, these cereal base pieces are dried. After drying, at step 120, the cereal base pieces are coated with one or more compositions to form coated cereal pieces. At step 125, the coated cereal pieces are dried. The resulting cereal product can then be packaged at step 130.

For the sake of completeness, it should be noted that the dry mix prepared in step 100 can take many forms known in the art, such as being formed with appropriately sized particles of whole grains supplied by any of the major cereal grains including wheat, corn (maize), oats, barley, rye, rice and mixtures thereof. In one form, the dry mix has only fine particles so as to constitute a cereal flour. The dry mix can also include various minor ingredients or additives such as sugar(s), salt and mineral salts (*e*.*g*., calcium carbonate, trisodium phosphate, tripotassium phosphate) and starches that can be conveniently pre-blended with the other portions of the dry mix. The dry mix can comprise about 40 to 99% (dry basis) of the cooked cereal dough formed in step 105. In terms of organoleptic attributes and reductions in RTE cereal piece frangibility, better results are obtained when the dry mix comprises about 75 to 99% of the cooked cereal dough.

The cereal base pieces formed in step 110 can be of any geometric configuration or form including, for example, flakes or puffs, shreds, biscuits, mini biscuits or the like. The present invention finds particular utility in connection with puffed cereal base pieces. Especially useful are smooth puffed pieces such as O- or ring-shaped pieces fabricated from oat-based cooked cereal doughs. Any conventional method of preparation can be used to provide these puffed cereal base pieces.

For those food products requiring low moisture contents, step 115 would be performed, *i.e.,* that a drying operation be performed prior to coating of the cereal base pieces. Typically, for example, puffed cereal base pieces must be dried to relatively low moisture contents in order to have the desired crispness or frangibility. Thus, when a puffed cereal is used in connection with the present invention, it is preferable to dry the puffed cereal base pieces to a moisture content of less than about 8%, and preferably less than about 6%, prior to the application of the coating in step 120. Any conventional drying technique can be used to reduce the moisture content of the cereal base pieces. The drying can be accomplished using equipment such as a rotary bed, tray or belt dryers. Simple hot air convection drying (at 200 °F to 280 °F (93 °C to 138 °C, for example) is the preferred technique for drying the cereal base pieces. Of course, in certain applications (*e.g*., when the puffed cereal base pieces are provided by direct expansion from a cooker extruder), the moisture content may be of suitable range without the need for a separate drying step. In other words, step 115 need not always be performed.

During the coating of step 120, the coating (or coatings) can be applied to the cereal base pieces using an enrober (*e*.*g*., an enrober drum) while the coating is at an elevated temperature and thus fluid. The coating can be at a temperature between 200 and 300 °F (93 and 149 °C), preferably between 212 and 300 °F (100 and 149 °C), and more preferably between 220 and 270 °F (104 and 132 °C). The coating should preferably be introduced as a fine spray. Any conventional enrobing apparatus and technique can be used in step 120. Generally, one useful technique involves tumbling. The cereal base pieces and coating are added to a rotating drum and tumbled for a sufficient time to achieve an even distribution of the coating on the cereal base pieces. Preferably, the coating is added to the drum after the cereal base pieces. Another useful technique involves spraying the coating over the cereal base pieces in situations where the cereal base pieces are desirably not tumbled due to their shape, frangibility, *etc.*

The coated cereal pieces have a moisture content in the range of about 2% to about 3.5% by weight to provide for shelf stable storage. Conventionally, this is accomplished by subjecting the coated cereal pieces to a drying step. In the present invention, this drying step is represented by step 125, during which the coated cereal pieces are placed in a dryer for a time sufficient to reduce their moisture content to the desired level. Specifically, step 125 serves to remove the moisture added with the one or more coatings of step 120. In certain embodiments, however, the coating can be at a sufficiently low moisture content that post-coating drying is minimal or even unnecessary.

The resulting cereal product is characterized by a thin coating that is typically about 20 to 40 microns in thickness. If desired, the cereal product can further be fortified with an exterior or topical application of heat-sensitive vitamins. In such a case, a dispersion of one or more vitamins is topically added to the cereal product such as by tumbling to form a vitamin-fortified cereal product. No further drying is required since only a small amount of moisture is added by the topical vitamin application. After the drying of step 125 and the optional vitamin fortification, the cereal product is allowed to cool to ambient temperature and then packaged in a conventional manner in step 130.

For cereals produced by the process described in connection with Figure 1, the relevant coatings, for purposes of the present invention, are those applied to the cereal base pieces in step 120. One of these coatings is made using sugar, particularly sucrose. The presence of sugar in cereal coatings is one of the main drivers of consumer preference. However, there is also pressure to reduce the sugar content of food products. In addition to affecting taste or flavor (by providing sweetness), sucrose has at least two other properties that make it useful in a coating. First, sucrose adds bulk. In some cereals, sucrose can account for about one third of the product by weight. Second, sucrose has a propensity to crystallize, which reduces stickiness during both processing and storage. Accordingly, when reducing the sucrose content of the coating by substituting one or more other ingredients for a portion of the sucrose, it would be beneficial for these ingredients to have all three of the same properties (at least in combination).

The present invention addresses this issue through the inclusion of erythritol in the coating. In particular, it has been found that erythritol alone has all the desired properties. Erythritol is about 60-70% as sweet as sucrose, adds bulk and has an even greater propensity to crystallize than sucrose. In addition, erythritol is considered a zero-calorie sweetener (although it does have a calorie content of 0.2 calories/gram, as compared to almost 4 calories per gram for sucrose). Thus, substituting erythritol for some of the sucrose provides a significant calorie reduction for the coated cereal product, *e.g*., about 25% or more as detailed further below. Also, erythritol has no glycemic response, is not counted as sugar for the purposes of nutritional labeling (although it is included in the total carbohydrates value), has excellent gastrointestinal tolerance and has a low viscosity in solution. Further, erythritol has a slower wash-off than sucrose, mainly due to reduced solubility at low temperatures, enabling a longer bowl life.

The propensity of erythritol and sucrose to crystallize is beneficial for reducing the stickiness of a food product coated with these ingredients. This is helpful during both production and storage of the food product. Accordingly, both initial (*i.e.,* time 0) and final crystallinity are important. Many sucrose substitutes do not crystallize, making erythritol somewhat unique in this respect. In fact, at a given soluble solids ratio, erythritol will have a higher crystallinity than sucrose. This enables the use of higher levels of other soluble solids, such as soluble corn fiber, without excessive stickiness and, more generally, provides greater flexibility in formulating the coating.

Important in connection with the invention, the erythritol and sucrose coating has a crystallinity of about 20% to about 60%, with at least a portion of the erythritol being crystalline erythritol and at least a portion of the sucrose being crystalline sucrose. The erythritol and sucrose concurrently crystallize (as opposed to co-crystallizing, which implies intermingling of crystals). For purposes of the present invention, a coating's crystallinity equals the total weight of crystals in the coating divided by the total weight of the coating. Similarly, a coating's erythritol crystallinity equals the weight of erythritol crystals in the coating divided by the total weight of the coating. A coating's sucrose crystallinity equals the weight of sucrose crystals in the coating divided by the total weight of the coating. In a given sample, crystals of erythritol and sucrose can be distinguished using differential scanning calorimetry, for example.

The crystallinity of the erythritol and sucrose coating is a function, at least in part, of the relative amounts of erythritol and sucrose in the coating. In particular, the coating has a soluble solids content (defined as the water-soluble ingredients of the coating) including erythritol and sucrose. The erythritol comprises more than 10% and up to about 50% by dry weight of the soluble solids content, and the sucrose comprises about 50% (minimum amount for crystallization) and up to about 90% by dry weight of the soluble solids content. In a more preferred embodiment, the erythritol comprises 15-45% by dry weight of the soluble solids content, and the sucrose comprises 55-85% by dry weight of the soluble solids content. In a most preferred embodiment, the erythritol comprises 20-40% by dry weight of the soluble solids content, and the sucrose comprises 60-80% by dry weight of the soluble solids content.

Crystallinity can be affected by various parameters. For example, initial crystallinity will be lower at low moisture contents. Also, crystallinity increases as the level of minors (*i.e.,* non-crystallizable solids) decreases. To further illustrate these issues and identify acceptable products in accordance with the invention, reference will now be made in comparing the following coating samples where "syrup" constitutes a sweetener in syrup form, such as honey and refiners syrup, honey and molasses or the like:

| V1 | | | V10 | | |
|---|---|---|---|---|---|
| | Erythritol | 32.70% | | Erythritol | 57.20% |
| | Sugar | 37.50% | | Soluble Corn Fiber | 17.00% |
| | Water | 15.00% | | Water | 11.00% |
| | Syrup | 13.47% | | Syrup | 13.47% |
| | Salt | 0.80% | | Salt | 0.80% |
| | Canola Oil | 0.53% | | Canola Oil | 0.53% |
| | Total | 100.00% | | Total | 100.00% |

| V2 | | | V11 | | |
|---|---|---|---|---|---|
| | Erythritol | 24.70% | | Erythritol | 49.20% |
| | Sugar | 45.50% | | Soluble Corn Fiber | 28.00% |
| | Water | 15.00% | | Water | 8.00% |
| | Syrup | 13.47% | | Syrup | 13.47% |
| | Salt | 0.80% | | Salt | 0.80% |
| | Canola Oil | 0.53% | | Canola Oil | 0.53% |
| | Total | 100.00% | | Total | 100.00% |

| V3 | | | V12 | | |
|---|---|---|---|---|---|
| | Erythritol | 16.70% | | Erythritol | 41.20% |
| | Sugar | 53.50% | | Soluble Corn Fiber | 40.00% |
| | Water | 15.00% | | Water | 3.97% |
| | Syrup | 13.47% | | Syrup | 13.50% |
| | Salt | 0.80% | | Salt | 0.80% |
| | Canola Oil | 0.53% | | Canola Oil | 0.53% |
| | Total | 100.00% | | Total | 100.00% |

| V4 | | | V13 | | |
|---|---|---|---|---|---|
| | Erythritol | 32.70% | | Erythritol | 32.70% |
| Sugar | 41.00% | | | Soluble Corn Fiber | 50.00% |
| Water | 16.14% | | | Water | 2.47% |
| Syrup | 8.83% | | | Syrup | 13.50% |
| Salt | 0.80% | | | Salt | 0.80% |
| Canola Oil | 0.53% | | | Canola Oil | 0.53% |
| Total | 100.00% | | | Total | 100.00% |

| V5 | | | V14 | | |
|---|---|---|---|---|---|
| | Erythritol | 24.70% | | Erythritol | 24.00% |
| | Sugar | 49.00% | | Soluble Corn Fiber | 61.00% |
| | Water | 16.14% | | Water | 0.17% |
| | Syrup | 8.83% | | Syrup | 13.50% |
| | Salt | 0.80% | | Salt | 0.80% |
| | Canola Oil | 0.53% | | Canola Oil | 0.53% |
| | Total | 100.00% | | Total | 100.00% |

| V6 | | | V15 | | |
|---|---|---|---|---|---|
| | Erythritol | 16.70% | | Sugar | 70.00% |
| | Sugar | 57.00% | | Water | 19.84% |
| | Water | 16.14% | | Syrup | 8.83% |
| | Syrup | 8.83% | | Salt | 0.80% |
| | Salt | 0.80% | | Canola Oil | 0.53% |
| | Canola Oil | 0.53% | | Total | 100.00% |
| | Total | 100.00% | | | |

| V7 | | | V16 | | |
|---|---|---|---|---|---|
| | Erythritol | 32.70% | | Sugar | 70.00% |
| | Sugar | 44.00% | | Water | 15.84% |
| | Water | 16.14% | | Syrup | 12.83% |
| | Syrup | 6.63% | | Salt | 0.80% |
| | Canola Oil | 0.53% | | Canola Oil | 0.53% |
| | Total | 100.00% | | Total | 100.00% |

| V8 | | V17 | | |
|---|---|---|---|---|
| | | | Sugar | 60.00% |
| Erythritol | 24.70% | | Soluble Corn Fiber | 10.00% |
| Sugar | 52.00% | | Water | 19.84% |
| Water | 16.14% | | Syrup | 8.83% |
| Syrup | 6.63% | | Salt | 0.80% |
| Canola Oil | 0.53% | | Canola Oil | 0.53% |
| Total | 100.00% | | Total | 100.00% |

| | | |
|---|---|---|
| V9 | Erythritol | 16.70% |
| Sugar | 60.00% | |
| Water | 16.14% | |
| Syrup | 6.63% | |
| Canola Oil | 0.53% | |
| Total | 100.00% | |

| V18 | | V19 | | |
|---|---|---|---|---|
| Sugar | 55.00% | | Sugar | 46.50% |
| Soluble Corn Fiber | 18.70% | | Soluble Corn Fiber | 29.20% |
| Water | 10.00% | | Water | 8.00% |
| Calcium Carbonate | 1.50% | | Calcium Carbonate | 1.50% |
| Syrup | 13.47% | | Syrup | 13.47% |
| Salt | 0.80% | | Salt | 0.80% |
| Canola Oil | 0.53% | | Canola Oil | 0.53% |
| Total | 100.00% | | Total | 100.00% |

While keeping in mind that both erythritol and sucrose are ingredients in these coatings which crystallize in connection with this sample data, the coatings have associated therewith the following measured (proximate) characteristics:

| | | | | Coating Crystallinity % | | Stickiness |
|---|---|---|---|---|---|---|
| Variation # | E/SS* | S/SS** | Syrup (%) | Erythritol | Sucrose | Final |
| V1 | 0.40 | 0.46 | 14.0% | 11% | 0% | 5.0 |
| V2 | 0.30 | 0.56 | 14.0% | 1% | 10% | 4.0 |
| V3 | 0.20 | 0.66 | 14.0% | 0% | 23% | 4.0 |
| V4 | 0.40 | 0.50 | 10.0% | 16% | 0% | 2.0 |
| V5 | 0.30 | 0.60 | 10.0% | 3% | 9% | 2.5 |
| V6 | 0.20 | 0.70 | 10.0% | 0% | 22% | 3.5 |
| V7 | 0.40 | 0.535 | 6.5% | 12% | 8% | 1.0 |
| V8 | 0.30 | 0.635 | 6.5% | 5% | 17% | 1.0 |
| V9 | 0.20 | 0.735 | 6.5% | 3% | 28% | 1.0 |
| V10 | 0.70 | 0.00 | 30.0% | 52% | 0% | 1.0 |
| V11 | 0.60 | 0.00 | 40.0% | 35% | 0% | 2.0 |
| V12 | 0.50 | 0.00 | 50.0% | 27% | 0% | 2.5 |
| V13 | 0.40 | 0.00 | 60.0% | 8% | 0% | 3.0 |
| V14 | 0.30 | 0.00 | 70.0% | 0% | 0% | 4.5 |
| V15 | 0.00 | 0.90 | 10.0% | 0% | 53% | 1.0 |
| V16 | 0.00 | 0.87 | 13.0% | 0% | 45% | 1.0 |
| V17 | 0.00 | 0.80 | 20.0% | 0% | 40% | 1.0 |
| V18 | 0.00 | 0.70 | 30.0% | 0% | 22% | 4.5 |
| V19 | 0.00 | 0.60 | 40.0% | 0% | 0% | 5.0 |

| | | | | | | |
|---|---|---|---|---|---|---|
| * E/SS = erythritol to soluble solids ratio ** S/SS = sucrose to soluble solids ratio | | | | | | |

It is important in connection with the overall invention to establish a non-sticky coating for food pieces. As evidenced by the above chart, a stickiness score was determined for the various coating samples applied to cereal pieces. In essence, scores of 4 and 5 were just too sticky; scores of 2 and 3 were moderately sticky; and a score of 1 was deemed not sticky in accordance with the invention. With regard to defining stickiness scores, it should be noted that this represents a qualitative measure of cohesiveness determined by the following method:
- Coat, dry, and package product.
- Store for at least 2 weeks at ambient temperature
- Put about 50 g of product in 4 inch x 4 inch (10.2 cm x 10.2 cm) shallow plastic trays
- Place trays in controlled environment chamber set to 100 °F (38 °C) and 38% relative humidity for at least 24 hr
- Remove trays from chamber and allow to cool to ambient temperature, about 30 min
- Tilt trays to pour product onto flat surface and assign stickiness score as follows
   1. Free flowing, no visible sticking
   2. Slight stickiness, requires steeper angle to flow, but eventually becomes free flowing
   3. Product comes off tray as one large piece and requires slight tapping force to break apart
   4. Product comes off tray as one large piece and requires moderate tapping force to break apart
   5. Product comes off tray as one large piece and requires significant tapping force to break apart, individual cereal pieces often fracture rather than breaking apart

In viewing the data, it should be clear that some tested samples only employing erythritol can achieve a desired stickiness rating (V10 and V11). However, the erythritol must then be used in much higher amounts. The same can be said for certain tested samples utilizing sucrose without erythritol (V15-V17). However, when both erythritol and sucrose are used together in accordance with the present invention, there is a synergistic effect achieved, particularly in the preferred ranges shown to achieve the lower stickiness rating.

Notably, both erythritol and sucrose crystallize more completely when they are combined with one another than when either is combined with another ingredient, such as dextrose or soluble corn fiber. For example, at an erythritol/soluble solids ratio of 0.70, 79% of the erythritol crystallizes when the erythritol is used in combination with sucrose, and 64% of the erythritol crystallizes when the erythritol is used in combination with dextrose. At a sucrose/soluble solids ratio of 0.6, 29% of the sucrose crystallizes when the sucrose is used in combination with erythritol, and 0.8% of the sucrose crystallizes when the sucrose is used in combination with dextrose.

The soluble solids content of the erythritol and sucrose coating includes no more than 10% by dry weight of soluble solids other than erythritol and sucrose. The soluble solids other than erythritol and sucrose can comprise a non-sucrose sugar (*i.e.,* a monosaccharide or disaccharide, such as fructose or glucose, or sugar-based syrups, such as honey, corn syrup, molasses, refiner's syrup, maple syrup, *etc.*)*,* a polysaccharide (*e.g.,* a 18 DE modified starch), a fiber (*e.g.,* inulin, soluble corn fiber, *etc.*)*,* a protein (*e.g.,* whey), a sugar alcohol (*e.g.,* maltitol, sorbitol, glycerol, *etc.),* a salt (*e.g.,* sodium chloride, calcium chloride, *etc.*)*,* a semi-soluble solid (*e.g.,* cocoa or cinnamon) or any combination thereof.

The erythritol and sucrose coating can comprise a water-insoluble ingredient (*e.g*., calcium carbonate, insoluble fiber, insoluble proteins, *etc.*)*.* The coating can further comprise water. In a preferred embodiment, the coating comprises about 12% to about 30% water by weight. In a more preferred embodiment, the coating comprises up to 25% water by weight. The coating can also comprise an oil, which primarily serves as a processing aid. In a preferred embodiment, the coating comprises up to 10% oil by weight.

Overall, the goal is to produce a comestible comprising a plurality of food pieces, each food piece having a surface, with the above-discussed coating or composition provided on at least a portion of the surface. The food piece and coating have a combined moisture content of about 2% to about 3.5% by weight. Also, the coating can comprise about 5% to about 50% by weight of the coated food pieces, with lower density food pieces generally having more coating by weight. In a preferred embodiment, the coating comprises 15-45% by weight of the coated food pieces. In a more preferred embodiment, the coating comprises 20-40% by weight of the coated food pieces.

These food pieces can be packaged together in a package, with or without other food pieces. That is, the food pieces of the present invention can be combined with food pieces not produced in the manner described above. For example, puffed cereal base pieces having an erythritol and sucrose coating can be combined with nuts, fruit or another type of cereal base piece.

In some embodiments, the method of the present invention comprises a step of applying a fat-based coating to the erythritol and sucrose coating. In some embodiments, the method comprises a step of applying a powder to the coating.

Based on the above, it should be readily apparent that the present invention provides improved reduced-sugar coatings, and coated comestibles prepared therewith, that have physical and organoleptic properties similar to those of coatings with more sugar.

## Claims

1. A comestible comprising:
a. a food piece having a surface, and
b. a coating having a crystallinity of about 20% to about 60% on at least a portion of the surface, the coating having a soluble solids content including erythritol, at least a portion of the erythritol being crystalline erythritol, and sucrose, at least a portion of the sucrose being crystalline sucrose, wherein the food piece and the coating have a combined moisture content of about 2% to about 3.5% by weight,
wherein the erythritol comprises more than 10% and up to about 50% by dry weight of the soluble solids content and wherein the sucrose comprises about 50% and up to about 90% by dry weight of the soluble solids content, and
wherein the soluble solids content includes no more than 10% by dry weight of soluble solids other than erythritol and sucrose.

2. The comestible of claim 1, wherein the erythritol comprises 15%-45% by dry weight of the soluble solids content and wherein the sucrose comprises 55-85% by dry weight of the soluble solids content.

3. The comestible of claim 1 or claim 2, wherein the soluble solids other than erythritol and sucrose comprise a non-sucrose sugar, a polysaccharide, a fiber, a protein, a sugar alcohol, a salt, a semi-soluble solid or any combination thereof.

4. The comestible of any of claims 1-3, wherein the coating comprises a water insoluble ingredient.

5. The comestible of any of claims 1-4, wherein the coating comprises about 5% to about 50% by weight of the coated food pieces.

6. The comestible of claim 5, wherein the coating comprises 15-45% by weight of the coated food pieces

7. A food product comprising the comestible of any of claims 1-6 and a second food piece.

8. A packaged food comprising the comestible of any of claims 1-6 in a package.

9. The packaged food of claim 8, further comprising a second food piece.

10. A method of making dried coated food pieces, the method comprising:
a. applying a composition to a surface of food pieces to produce coated food pieces, the composition including
i. a soluble solids component having a soluble solids content including erythritol in an amount more than 10% and up to about 50% by dry weight of the soluble solid content and sucrose in an amount of about 50% and up to about 90% of the soluble solids content, with no more than 10% by dry weight of the soluble solids content being other than erythritol and sucrose; and
ii. water; and
b. drying the coated food pieces to form dried food pieces having at least a partial coating, the coating including at least a portion of the sucrose in crystal form and at least a portion of the erythritol in crystal form, wherein the dried food pieces have a moisture content of about 2% to about 3.5% by weight.

11. The method of claim 10, wherein the soluble solids content other than erythritol and sucrose comprises a non-sucrose sugar, a polysaccharide, a fiber, a protein, a sugar alcohol, a salt, a semi-soluble solid, or any combination thereof.

12. The method of claim 10 or 11, wherein the composition further comprises an oil.

13. The method of any of claims 10-12, wherein the composition further comprises a water insoluble ingredient.

14. The method of any of claims 10-13, further comprising a step of applying a fat-based coating to the coating.

15. The method of any of claims 10-14, further comprising a step of applying a powder to the coating.

16. The method of any of claims 10-15, wherein the composition includes water in an amount of about 12% to about 30%.

## Patentansprüche

1. Nahrungsmittel umfassend:
a. ein Lebensmittelstück, das eine Oberfläche aufweist, und
b. eine Beschichtung, die eine Kristallinität von etwa 20 % bis etwa 60 % auf mindestens einem Anteil der Oberfläche aufweist, wobei die Beschichtung einen Gehalt an löslichen Feststoffen aufweist, einschließlich Erythritol, wobei mindestens ein Anteil des Erythritols kristallines Erythritol ist, und Saccharose, wobei mindestens ein Anteil der Saccharose kristalline Saccharose ist, wobei das Lebensmittelstück und die Beschichtung einen kombinierten Feuchtigkeitsgehalt von etwa 2 Gew.-% bis etwa 3,5 Gew.-% aufweisen,
wobei das Erythritol zu mehr als 10 % und bis zu etwa 50 % des Trockengewichts den löslichen Feststoffgehalt umfasst und wobei die Saccharose zu etwa 50 % und bis zu etwa 90 % des Trockengewichts den löslichen Feststoffgehalt umfasst, und
wobei der Gehalt an löslichen Feststoffen nicht zu mehr als 10 % des Trockengewichts an anderen löslichen Feststoffen als Erythritol und Saccharose umfasst.

2. Nahrungsmittel nach Anspruch 1, wobei das Erythritol zu 15 %-45 % des Trockengewichts den löslichen Feststoffgehalt umfasst und wobei die Saccharose zu 55-85 % des Trockengewichts den löslichen Feststoffgehalt umfasst.

3. Nahrungsmittel nach Anspruch 1 oder 2, wobei die löslichen Feststoffe außer Erythritol und Saccharose einen Nicht-Saccharose-Zucker, ein Polysaccharid, eine Faser, ein Protein, einen Zuckeralkohol, ein Salz, einen halblöslichen Feststoff oder eine beliebige Kombination davon umfassen.

4. Nahrungsmittel nach einem der Ansprüche 1 bis 3, wobei die Beschichtung einen wasserunlöslichen Bestandteil umfasst.

5. Nahrungsmittel nach einem der Ansprüche 1 bis 4, wobei die Beschichtung zu etwa 5 Gew.-% bis zu etwa 50 Gew.-% die beschichteten Lebensmittelstücke umfasst.

6. Nahrungsmittel nach Anspruch 5, wobei die Beschichtung zu 15-45 Gew.-% die beschichteten Lebensmittelstücke umfasst

7. Lebensmittelprodukt, umfassend das Nahrungsmittel nach einem der Ansprüche 1 bis 6 und ein zweites Lebensmittelstück.

8. Verpacktes Lebensmittel, umfassend das Nahrungsmittel nach einem der Ansprüche 1 bis 6 in einer Verpackung.

9. Verpacktes Lebensmittel nach Anspruch 8, ferner umfassend ein zweites Lebensmittelstück.

10. Verfahren zum Herstellen von getrockneten, beschichteten Lebensmittelstücken, das Verfahren umfassend:
a. Aufbringen einer Zusammensetzung auf eine Oberfläche von Lebensmittelstücken, um beschichtete Lebensmittelstücke zu erzeugen, wobei die Zusammensetzung einschließt
i. eine lösliche Feststoffkomponente, die einen löslichen Feststoffgehalt aufweist, einschließlich Erythritol in einer Menge von zu mehr als 10 % und bis zu etwa 50 % des Trockengewichts den löslichen Feststoffgehalt und Saccharose in einer Menge von zu etwa 50 % und bis zu etwa 90 % des löslichen Feststoffgehalts, wobei nicht mehr als zu 10 % des Trockengewichts der lösliche Feststoffgehalt ein anderer als Erythritol und Saccharose ist; und
ii. Wasser; und
b. Trocknen der beschichteten Lebensmittelstücke, um getrocknete Lebensmittelstücke auszubilden, die mindestens eine Teilbeschichtung aufweisen, wobei die Beschichtung mindestens einen Anteil der Saccharose in Kristallform und mindestens einen Anteil des Erythritols in Kristallform einschließt, wobei die getrockneten Lebensmittelstücke einen Feuchtigkeitsgehalt von etwa 2 Gew.-% bis etwa 3,5 Gew.-% aufweisen.

11. Verfahren nach Anspruch 10, wobei der lösliche Feststoffgehalt außer Erythritol und Saccharose einen Nicht-Saccharose-Zucker, ein Polysaccharid, eine Faser, ein Protein, einen Zuckeralkohol, ein Salz, einen halblöslichen Feststoff oder eine beliebige Kombination davon umfasst.

12. Verfahren nach Anspruch 10 oder 11, wobei die Zusammensetzung ferner ein Öl umfasst.

13. Verfahren nach einem der Ansprüche 10 bis 12, wobei die Zusammensetzung ferner einen wasserunlöslichen Bestandteil umfasst.

14. Verfahren nach einem der Ansprüche 10 bis 13, ferner umfassend einen Schritt des Aufbringens einer fettbasierten Beschichtung auf die Beschichtung.

15. Verfahren nach einem der Ansprüche 10 bis 14, ferner umfassend einen Schritt des Aufbringens eines Pulvers auf die Beschichtung.

16. Verfahren nach einem der Ansprüche 10 bis 15, wobei die Zusammensetzung Wasser in einer Menge von etwa 12 % bis etwa 30 % einschließt.

## Revendications

1. Comestible comprenant :
a. un élément de produit alimentaire ayant une surface, et
b. un enrobage ayant une cristallinité allant d'environ 20 % à environ 60 % sur au moins une partie de la surface, l'enrobage ayant une teneur en solides solubles comportant de l'érythritol, au moins une partie de l'érythritol étant de l'érythritol cristallin, et du saccharose, au moins une partie du saccharose étant du saccharose cristallin, dans lequel l'élément de produit alimentaire et l'enrobage ont une teneur en humidité combinée allant d'environ 2 % à environ 3,5 % en poids,
dans lequel l'érythritol comprend plus de 10 % et jusqu'à environ 50 % en poids sec de la teneur en solides solubles et dans lequel le saccharose comprend environ 50 % et jusqu'à environ 90 % en poids sec de la teneur en solides solubles, et
dans lequel la teneur en solides solubles ne comporte pas plus de 10 % en poids sec de solides solubles autres que l'érythritol et le saccharose.

2. Comestible selon la revendication 1, dans lequel l'érythritol comprend 15 % à 45 % en poids sec de la teneur en solides solubles et dans lequel le saccharose comprend 55 à 85 % en poids sec de la teneur en solides solubles.

3. Comestible selon la revendication 1 ou la revendication 2, dans lequel les solides solubles autres que l'érythritol et le saccharose comprennent un sucre autre que le saccharose, un polysaccharide, une fibre, une protéine, un alcool glucidique, un sel, un solide semi-soluble ou une combinaison quelconque de ceux-ci.

4. Comestible selon l'une quelconque des revendications 1 à 3, dans lequel l'enrobage comprend un ingrédient insoluble dans l'eau.

5. Comestible selon l'une quelconque des revendications 1 à 4, dans lequel l'enrobage comprend environ 5 % à environ 50 % en poids d'éléments de produit alimentaire enrobés.

6. Comestible selon la revendication 5, dans lequel l'enrobage comprend 15 à 45 % en poids d'éléments de produit alimentaire enrobés.

7. Produit alimentaire comprenant le comestible selon l'une quelconque des revendications 1 à 6 et un second élément de produit alimentaire.

8. Produit alimentaire emballé comprenant le comestible selon l'une quelconque des revendications 1 à 6 dans un emballage.

9. Produit alimentaire emballé selon la revendication 8, comprenant en outre un second élément de produit alimentaire.

10. Procédé pour la fabrication d'éléments de produit alimentaire enrobés séchés, le procédé comprenant :
a. l'application d'une composition sur une surface d'éléments de produit alimentaire afin de produire des éléments de produit alimentaire enrobés, la composition comportant
i. un composant à solides solubles ayant une teneur en solides solubles comportant de l'érythritol en une quantité supérieure à 10 % et allant jusqu'à environ 50 % en poids sec de la teneur en solides solubles et du saccharose en une quantité d'environ 50 % et allant jusqu'à environ 90 % de la teneur en solides solubles, avec pas plus de 10 % en poids sec de la teneur en solides solubles autres que l'érythritol et le saccharose ; et
ii. de l'eau ; et
b. le séchage des éléments de produit alimentaire enrobés pour former des éléments de produit alimentaire séchés ayant au moins un enrobage partiel, l'enrobage comportant au moins une partie du saccharose sous forme cristalline et au moins une partie de l'érythritol sous forme cristalline, dans lequel les éléments de produit alimentaire séchés ont une teneur en humidité allant d'environ 2 % à environ 3,5 % en poids.

11. Procédé selon la revendication 10, dans lequel la teneur en solides solubles autres que l'érythritol et le saccharose comprend un sucre autre que le saccharose, un polysaccharide, une fibre, une protéine, un alcool glucidique, un sel, un solide semi-soluble, ou une combinaison quelconque de ceux-ci.

12. Procédé selon la revendication 10 ou 11, dans lequel la composition comprend en outre une huile.

13. Procédé selon l'une quelconque des revendications 10 à 12, dans lequel la composition comprend en outre un ingrédient insoluble dans l'eau.

14. Procédé selon l'une quelconque des revendications 10 à 13, comprenant en outre une étape d'application d'un enrobage à base de graisse sur l'enrobage.

15. Procédé selon l'une quelconque des revendications 10 à 14, comprenant en outre une étape d'application d'une poudre sur l'enrobage.

16. Procédé selon l'une quelconque des revendication 10 à 15, dans lequel la composition comporte de l'eau en une quantité allant d'environ 12 % à environ 30 %.
